# EUROPEAN PATENT APPLICATION

(11) **EP 3 048 620 A1**
(43) Date of publication of application: **27.07.2016**
(21) Application number: 15152440.2
(22) Date of filing: 26.01.2015
(51) Int. Cl.: H01G 2/08, H01G 11/10, H01G 11/18

(54) **A capacitor module for a working machine**

(71) Applicant: Visedo Oy, 53600 Lappeenranta (FI)
(72) Inventor: Naumanen, Ville, 53830 Lappeenranta (FI); Piispanen, Mikko, 53900 Lappeenranta (FI); Järveläinen, Tero, 53850 Lappeenranta (FI); Iskanius, Matti, 53850 Lappeenranta (FI)
(74) Representative: Berggren Oy Ab

(57) **Abstract**

A capacitor module comprises one or more capacitor elements (101-103) and a frame structure (105) comprising a cavity containing the one or more capacitor elements. The cavity contains liquid (106), e.g. transformer oil, for transferring heat from the one or more capacitor elements to the frame structure by way of convection circulation occurring inside the cavity. The liquid inherently balances temperatures in the cavity because the convection circulation caused by temperature differences in the liquid is stronger in the vicinity of such places of the one or more capacitor elements where the temperature tends to rise most strongly.

## Description

### Field of technology

The disclosure relates to a capacitor module suitable for being a capacitive energy-storage or a basic construction unit of a capacitive energy-storage. Furthermore, the disclosure relates to a working machine comprising an electromechanical power transmission chain.

### Background

An electromechanical power transmission chain comprises typically one or more electrical machines and a power electronic converter. The electromechanical power transmission chain can be a series transmission chain where one of the electrical machines operates as generator and the power electronic converter is arranged to convert the electrical voltages produced by the generator into electrical voltages having amplitudes and frequencies suitable for the one or more other electrical machines. The generator can be driven with a combustion engine that can be e.g. a diesel engine, an Otto-cycle engine, or a turbine engine. The other electrical machines can be, for example, electrical motors in wheels of a working machine. The power electronic converter comprises typically an intermediate circuit, a converter stage between the generator and the intermediate circuit, and one or more other converter stages between the intermediate circuit and the other electrical machines. It is also possible that the electromechanical power transmission chain is a parallel transmission chain where the generator is occasionally used as a motor that assists the combustion engine, especially when high output power is needed. In this case, the power electronic converter comprises typically an intermediate circuit, a converter stage between the generator and the intermediate circuit, and one or more converter stages between the intermediate circuit and one or more energy-storages.

The above-mentioned intermediate circuit is typically a capacitive energy-storage that comprises one or more capacitor modules each comprising one or more capacitor elements and a cooling structure for cooling the one or more capacitor elements. The cooling structure comprises typically one or more heat-sink elements in heat conductive relations with the capacitor elements. Each heat-sink element can be provided with cooling fins for conducting heat to the ambient air and/or with cooling ducts for conducting cooling fluid, e.g. water. A cooling arrangement of the kind described above is, however, not free from challenges. One of the challenges is related to the need to ensure that temperatures of also the hottest spots of the capacitor elements are below a safety limit.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the invention, there is provided a new capacitor module that is suitable for being a capacitive energy-storage or a basic construction unit of a capacitive energy-storage. A capacitor module according to the invention comprises:
- one or more capacitor elements each comprising an electrode structure for storing electrical energy in the form of electric charge polarization between the electrodes of the electrode structure, and
- a frame structure comprising a cavity containing the one or more capacitor elements.

The cavity containing the one or more capacitor elements is arranged to contain liquid for transferring heat from the one or more capacitor elements to the frame structure by way of convection circulation occurring inside the cavity. The liquid inherently balances temperatures in the cavity because the convection circulation caused by temperature differences in the liquid is stronger in the vicinity of such places of the one or more capacitor elements where the temperature tends to rise most strongly.

In accordance with the invention, there is provided also a new working machine that can be, for example but not necessarily, a tractor, a bucket charger, a road drag, an excavator, a bulldozer, a stone crusher, or a wood chipping machine. A working machine according to the invention comprises:
- a combustion engine,
- one or more functional elements to be driven with mechanical power, and
- an electromechanical power transmission chain between the combustion engine and the one or more functional elements.

The electromechanical power transmission chain of the working machine comprises a capacitive energy-storage that comprises one or more capacitor modules according to the invention.

The above-mentioned one or more functional elements of the working machine may comprise for example a hydraulic pump of a hydraulic system of the working machine, wheels of the working machine, and/or chain tracks of the working machine.

The working machine comprises, advantageously but not necessarily, a liquid cooling system configured to cool both a hydraulic system of the working machine and the electromechanical power transmission chain.

A number of exemplifying and non-limiting embodiments of the invention are described in accompanied dependent claims.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### Brief description of the figures

Exemplifying and non-limiting embodiments of the invention and their advantages are explained in greater detail below in the sense of examples and with reference to the accompanying drawings, in which:
figures 1a, 1b, and 1c illustrate a capacitor module according to an exemplifying and non-limiting embodiment of the invention, and
figure 2 shows a schematic illustration of a working machine according to an exemplifying and non-limiting embodiment of the invention.

### Description of the exemplifying embodiments

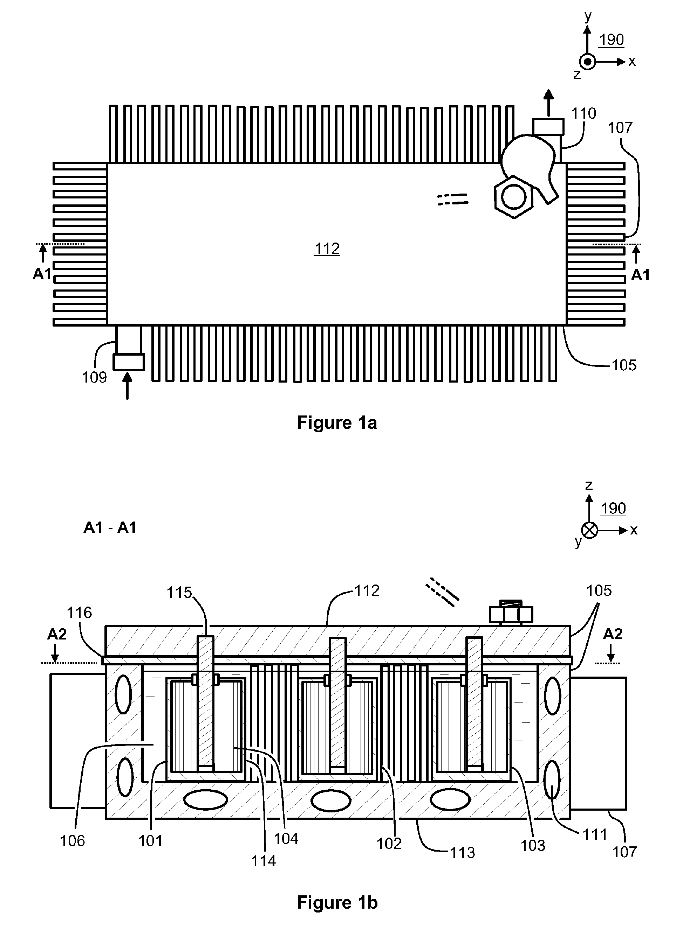

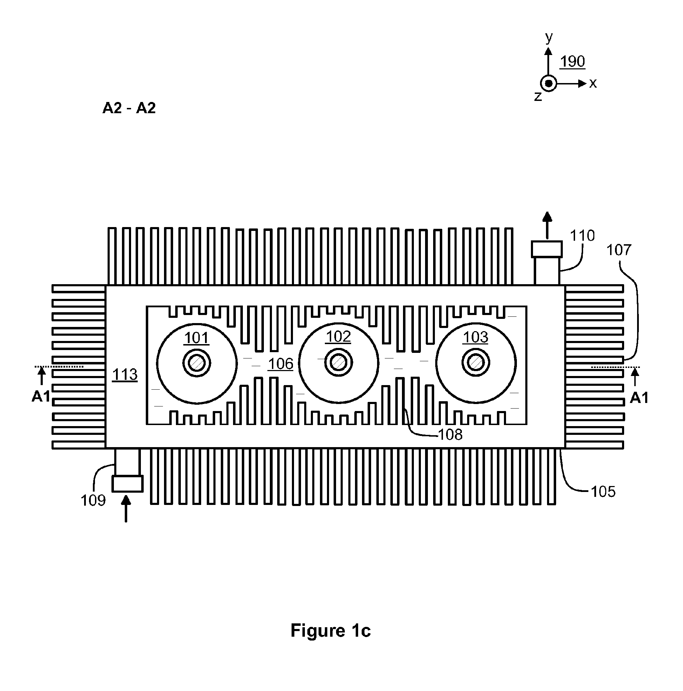

Figure 1 a shows a capacitor module according to an exemplifying and non-limiting embodiment of the invention. Figure 1b shows a view of a section taken along a line A1-A1 shown in figure 1 a. Figure 1c shows a view of a section taken along a line A2-A2 shown in figure 1b. The section plane related to figure 1b is parallel with the xz-plane of a coordinate system 190, and the section plane related to figure 1c is parallel with the xy-plane of the coordinate system 190. In the exemplifying case illustrated in figures 1a-1c, the capacitor module comprises three capacitor elements 101, 102, and 103. Each of the capacitor elements comprises an electrode structure for storing electrical energy in the form of electric charge polarization between the electrodes of the electrode structure. Furthermore, each of the capacitor elements comprises a casing made of e.g. aluminum. In figure 1b, the electrode structure of the capacitor element 101 is denoted with a reference number 104 and the casing of the capacitor element 101 is denoted with a reference number 114. The electrode structure 101 may comprise e.g. a first foil, a second foil, and dry dielectric material between the first and second foils. It is also possible that the electrode structure 101 comprises an anode foil, a cathode foil, and porous filler material between the anode and cathode foils so that the filler material is impregnated with liquid electrolyte. In this case, the capacitor module is an electrolytic capacitor. Furthermore, it is also possible that the electrode structure 101 constitutes an electric double-layer capacitor "EDLC" which is often called a "super capacitor".

The capacitor module comprises a frame structure 105 that comprises a cavity containing the capacitor elements 101-103. The cavity of the frame structure is arranged to contain liquid 106 for transferring heat from the capacitor elements 101-103 to the frame structure by way of convection circulation occurring inside the cavity. The liquid 106 can be for example transformer oil. The liquid 106 inherently balances temperatures in the cavity because the convection circulation caused by temperature differences in the liquid is stronger in the vicinity of such places of the capacitor elements where the temperature tends to rise most strongly. It is also possible to provide the cavity of the capacitor module with one or more motor driven stirrers for intensifying the temperature balancing effect of the liquid.

The outer surface of the frame structure 105 can be provided with first cooling fins for conducting heat from the frame structure to the ambient air. In figures 1a-1c, one of the first cooling fins is denoted with a reference number 107. The surface of the cavity can be provided with second cooling fins for intensifying the heat transfer from the liquid 106 to the frame structure 105. In figure 1c, one of the second cooling fins is denoted with a reference number 108. The frame structure 105 can be provided with a first piping interface for receiving liquid or gaseous cooling fluid, cooling ducts for conducting the cooling fluid, and a second piping interface for exhausting the cooling fluid. Liquid cooling fluid can be e.g. water, and gaseous cooling fluid can be e.g. air. In figures 1 a and 1c, the first piping interface is denoted with a reference number 109 and the second piping interface is denoted with a reference number 110. In figure 1b, one of the cooling ducts is denoted with a reference number 111. The first piping interface 109 and the second piping interface 110 can be connected to for example a cooling system where the cooling fluid is arranged to cool also other components in addition to the capacitor module. The other components may comprise for example power electronic semiconductor components.

In the exemplifying capacitor module illustrated in figures 1a-1c, one electrode of each capacitor element is electrically connected to the casing of the capacitor element under consideration and the other the electrode of the capacitor element is electrically connected to a terminal element which is electrically insulated from the casing. Therefore, in this exemplifying case, the casing of each capacitor element acts also as an electrical pole of the capacitor element under consideration. It is, however, also possible that each capacitor element comprises two terminal elements which are electrically insulated from each other and from the casing. In figure 1b, the terminal element of the capacitor element 101 is denoted with a reference number 115.

In the exemplifying capacitor module illustrated in figures 1a-1c, the frame structure 105 comprises a body part 113 comprising the cavity and a lid 112 for closing the cavity. In this exemplifying case, the body part and the lid are made of electrically conductive material and the body part and the lid are electrically insulated from each other with the aid of electrical insulator 116. In a general case, the capacitor elements of a capacitor module according to an embodiment of the invention can be parallel connected or series connected, or the capacitor module may comprise parallel connected groups of series connected capacitor elements and/or series connected groups of parallel connected capacitor elements. It is worth noting that the electrical connection of the capacitor elements is immaterial from the viewpoint of the cooling arrangement described above. In the exemplifying case illustrated in figures 1a-1c, the capacitor elements 101-103 are parallel connected so that the casings of the capacitor elements are electrically connected to the body part 113 of the frame structure and the terminal elements of the capacitor elements are electrically connected to the lid 112. Therefore, in this exemplifying case, the body part 113 and the lid 112 act as electrical poles of the capacitor module. It is also possible that the capacitor module comprises two electrical poles which are electrically insulated from the frame structure. Furthermore, it is also possible that the capacitor module comprises an electrical pole that is electrically insulated from the frame structure and the frame structure acts as the other electrical pole of the capacitor module. Yet furthermore, it is possible that there are electrical poles for one or more of the capacitor elements so that the electrical connections between these capacitor elements can be made outside the capacitor module.

The body part 113 of the frame structure 105 can be manufactured as a single piece of material e.g. by casting or extrusion and/or machining. It is, however, also possible that the body part 113 is manufactured by attaching, e.g. welding, together elements of the body part. In this case, the body part 113 can be made of e.g. metal sheet. The lid 112 of the frame structure 105 can be manufactured e.g. by casting or extrusion and/or machining.

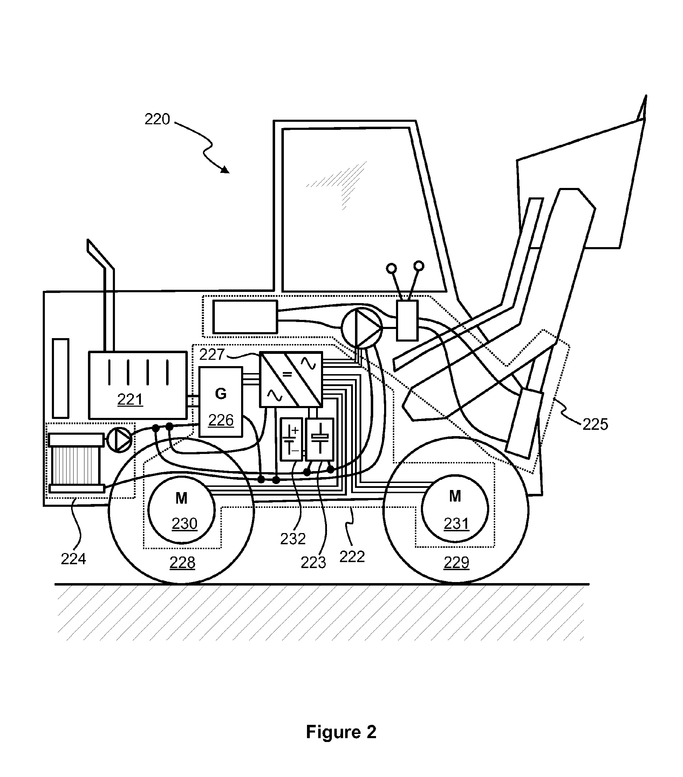

Figure 2 shows a schematic illustration of a working machine 220 according to an exemplifying and non-limiting embodiment of the invention. In this exemplifying case, the working machine is a bucket charger but the working machine could as well be for example a tractor, a road drag, an excavator, a bulldozer, a stone crusher, or a wood chipping machine. The working machine comprises a combustion engine 221 that can be e.g. a diesel engine, an Otto-cycle engine, or a turbine engine. The working machine comprises an electromechanical power transmission chain 222 between the combustion engine 221 and wheels of the working machine. In figure 2, two of the wheels are denoted with reference numbers 228 and 229.The electromechanical power transmission chain comprises a generator 226 the rotor of which is mechanically connected to the shaft of the combustion engine. The electromechanical power transmission chain comprises a power electronic converter 227 and electrical motors at the hubs of the wheels of the working machine. In figure 2, two of the electrical motors are denoted with reference numbers 230 and 231. The electronic power converter 227 is arranged to convert the electrical voltage produced by the generator 226 into electrical voltages having amplitudes and frequencies suitable for the electrical motors. The electromechanical power transmission chain further comprises a capacitive energy-storage 223 comprising one or more capacitor modules. Each capacitor module comprises one or more capacitor elements and a frame structure that comprises a cavity containing the one or more capacitor elements. The cavity of the frame structure is arranged to contain liquid for transferring heat from the one or more capacitor elements to the frame structure by way of convection circulation occurring inside the cavity. The frame structure may comprise first cooling fins for conducting heat from the frame structure to the ambient air and/or second cooling fins inside the cavity so as to intensify the heat transfer from the liquid to the frame structure.

A working machine according to an exemplifying and non-limiting embodiment of the invention comprises a liquid cooling system 224. In this exemplifying case, the frame structure of each capacitor module of the capacitive energy-storage 223 comprises advantageously cooling ducts connected to the liquid cooling system 224. The liquid cooling system 224 can be arranged to cool also the other parts of the electromechanical power transmission chain 222, and/or a hydraulic system 225 of the working machine, and/or the combustion engine 221. The above-mentioned other parts of the electromechanical power transmission chain 222 comprise e.g. the power electronic converter 227.

A working machine according to an exemplifying embodiment of the invention comprises a battery element 232 which, together with the capacitive energy-storage 223, can be used for responding to peak power needs exceeding the maximum power of the combustion engine 221.

The specific examples provided in the description given above should not be construed as limiting the applicability and/or interpretation of the appended claims. Lists and groups of examples provided in the description given above are not exhaustive unless otherwise explicitly stated.

## Claims

1. A capacitor module comprising:
- one or more capacitor elements (101-103) each comprising an electrode structure (104) for storing electrical energy in form of electric charge polarization between electrodes of the electrode structure, and
- a frame structure (105) comprising a cavity containing the one or more capacitor elements,
**characterized in that** the cavity contains liquid (106) for transferring heat from the one or more capacitor elements to the frame structure by way of convection circulation occurring inside the cavity.

2. A capacitor module according to claim 1, wherein an outer surface of the frame structure comprises first cooling fins (107) for conducting heat from the frame structure to ambient air.

3. A capacitor module according to claim 1 or 2, wherein a surface of the cavity comprises cooling second fins (108) for intensifying heat transfer from the liquid to the frame structure.

4. A capacitor module according to any of claims 1-3, wherein the frame structure comprises a first piping interface (109) for receiving cooling fluid, cooling ducts (110) for conducting the cooling fluid, and a second piping interface (111) for exhausting the cooling fluid.

5. A capacitor module according to any of claims 1-4, wherein at least one of the capacitor elements is electrically connected to the frame structure.

6. A capacitor module according to any of claims 1-5, wherein the frame structure comprises a body part (113) comprising the cavity and an electrically conductive lid (112) closing the cavity, the electrically conductive lid being electrically connected to at least one of the capacitor elements and being electrically insulated from the body part (113).

7. A capacitor module according to any of claims 1-6, wherein the electrode structure comprises a first foil, a second foil, and dry dielectric material between the first and second foils.

8. A capacitor module according to any of claims 1-6, wherein the electrode structure comprises an anode foil, a cathode foil, and porous filler material located between the anode and cathode foils and impregnated with liquid electrolyte.

9. A capacitor module according to any of claims 1-6, wherein the electrode structure constitutes an electric double-layer capacitor.

10. A working machine (220) comprising:
- a combustion engine (221),
- one or more functional elements to be driven with mechanical power, and
- an electromechanical power transmission chain (222) between the combustion engine and the one or more functional elements,
wherein the electromechanical power transmission chain comprises a capacitive energy-storage (223) comprising at least one capacitor module according to any of claims 1-9.

11. A working machine according to claim 10, wherein the capacitor module is according to claim 4 and the working machine comprises a liquid cooling system (224) connected to the cooling ducts of the capacitor module.

12. A working machine according to claim 11, wherein the liquid cooling system is configured to cool at least one of the following: a hydraulic system (225) of the working machine, a power electronic converter (227) of the electromechanical power transmission chain.
